(19) Europäisches Patentamt

European Patent Office

Office européen des brevets

(11) Numéro de publication : **0 043 308**
**B1**

(12) **FASCICULE DE BREVET EUROPÉEN**

(45) Date de publication du fascicule du brevet :
**21.03.84**

(21) Numéro de dépôt : **81400983.3**

(22) Date de dépôt : **18.06.81**

(51) Int. Cl.³ : **H 04 B 17/02**

(54) **Installation de télélocalisation pas-à-pas de circuits d'amplification intermédiaires d'une liaison MIC.**

(30) Priorité : **02.07.80 FR 8014769**

(43) Date de publication de la demande :
**06.01.82 Bulletin 82/01**

(45) Mention de la délivrance du brevet :
**21.03.84 Bulletin 84/12**

(84) Etats contractants désignés :
**DE GB IT**

(56) Documents cités :
**DE-A- 2 653 178
DE-A- 2 703 930
DE-A- 2 904 076
US-A- 3 678 222
TELCOM REPORT 2, (1979) Special Issue "Digital
Transmission", pages 100 à 104
THE RADIO AND ELECTRONIC ENGINEER, Vol. 44,
No. 8, août 1974, pages 421 à 427**

Le dossier contient des informations techniques présentées postérieurement au dépôt de la demande et
ne figurant pas dans le présent fascicule.

(73) Titulaire : **SOCIETE ANONYME DE TELECOMMUNI-
CATIONS
41, rue Cantagrel
F-75624 Paris Cedex 13 (FR)**

(72) Inventeur : **Bargeton, Gilbert Louis
55, rue Servan
F-75011 Paris (FR)**
Inventeur : **Beynie, Claude Paul Marcel
30, rue du Bois des Moines
F-94210 La Varenne (FR)**

(74) Mandataire : **Cabinet Martinet
62, rue des Mathurins
F-75008 Paris (FR)**

Il est rappelé que : Dans un délai de neuf mois à compter de la date de publication de la mention de la délivrance du
brevet européen toute personne peut faire opposition au brevet européen délivré, auprès de l'Office européen des
brevets. L'opposition doit être formée par écrit et motivée. Elle n'est réputée formée qu'après paiement de la taxe
d'opposition (Art. 99(1) Convention sur le brevet européen).

Installation de télélocalisation pas-à-pas de circuits d'amplification intermédiaires d'une liaison MIC

La présente invention concerne une installation de télélocalisation de paires de circuits d'amplification intermédiaires insérés entre deux équipements terminaux d'une liaison de transmission numérique MIC bidirectionnelle.

Plus particulièrement, elle a trait à une installation de télélocalisation dans laquelle la télélocalisation des paires de circuits d'amplification intermédiaires est effectuée pas-à-pas, c'est-à-dire sans un signal d'adressage particulier propre à chaque paire. La transmission des signaux de télélocalisation ne nécessite pas de moyen auxiliaire d'acheminement autre que la liaison véhiculant normalement le signal informatif MIC et de mélangeurs pour la superposition de fréquences. Une telle installation a l'avantage de ne pas mettre en œuvre, dans les circuits d'amplification intermédiaires tels que des répéteurs, des filtres séparateurs d'entrée et de sortie de puissance, des filtres de fréquence et des démodulateurs ou un circuit détectant l'adresse propre à la paire. Il en résulte une simplicité du circuit de télélocalisation associé à chaque paire de circuits d'amplification intermédiaires, conjointement à un coût de fabrication relativement faible, à une consommation en courant réduite et à une excellente fiabilité.

La télélocalisation selon l'invention est fondée sur la détection d'interruptions du signal MIC qui ne se rencontrent normalement pas dans le signal numérique informatif acheminé par la liaison et qui ont des caractéristiques qui respectent les règles de transparence édictées par les avis et recommandations correspondants des organismes internationaux en matière de transmission téléphonique. Une telle installation comprend les éléments énoncés dans le préambule de la revendication 1. Un procédé de télélocalisation sans adressage mis en œuvre par de tels éléments est décrit dans l'article de Reginhard POSPISCHIL, intitulé — Digital System DS 34 CX for Transmitting 34 Mbit/s Signals on Coaxial Pairs —, publié dans — Telcom report 2 (1979) Special Issue « Digital Transmission » —, pages 100 à 104, notamment sous le paragraphe « Monitoring and fault locating », ou dans la DE-A-2 653 178 dont l'inventeur est également Reginhard POSPISCHIL.

Le procédé de télélocalisation divulgué par ces deux documents fait appel à des première et seconde interruptions de durées prédéterminées en tant que séquence de télélocalisation — appelée également « commande de fermeture de boucle » d'une paire de circuits intermédiaires — et interruption de fin de télélocalisation.

La séquence de télélocalisation est constituée par une unique interruption, c'est-à-dire une suite de plusieurs digits consécutifs à l'état zéro. Le nombre prédéterminé de ces digits à l'état zéro est égal à un multiple entier du plus grand nombre de digits à l'état zéro qu'est susceptible de contenir le signal informatif MIC convoyé normalement dans la liaison. Par exemple, lorsque le code dans la liaison utilisé est le code bipolaire HDBn, la séquence de télélocalisation est composée d'un multiple entier de n + 1 digits à l'état zéro. Toutes les séquences de télélocalisation sont identiques.

Pour procéder à un bouclage d'une paire prédéterminée de circuits intermédiaires, une interruption — appelée signal de préparation — est émise par le premier équipement terminal dit surveillant afin d'activer les circuits de télélocalisation de toutes les paires. Puis un nombre de séquences de télélocalisation identiques est émis dans la voie aller par le premier équipement pour obtenir le bouclage de la paire déterminée. L'intervalle entre deux séquences de télélocalisation ou deux premières interruptions a une durée prédéterminée, de l'ordre de 100 µs, et est rempli des digits d'un signal numérique MIC, tel qu'un signal de test.

Pour obtenir la rupture de la boucle, une seconde interruption dite de fin de télélocalisation est émise sur la voie aller par le premier équipement terminal. Le circuit de télélocalisation de la paire précédemment bouclée détecte cette seconde interruption et commande les moyens de bouclage et de débouclage pour rompre la boucle. La seconde interruption est également composée d'une suite de digits consécutifs à l'état zéro dont le nombre est plus grand que celui contenu dans une séquence de télélocalisation.

Au cours de l'acheminement du signal MIC, il est connu que peuvent être présentes des interruptions parasites dues par exemple à des éléments externes à la liaison tels que la foudre, ou à des éléments internes tels que des répéteurs ne fonctionnant pas normalement pendant une brève durée. Ces interruptions parasites peuvent avoir une largeur du même ordre de grandeur que celle des séquences de télélocalisation selon le procédé connu précédent. Dans ce cas, les interruptions parasites peuvent produire des bouclages intempestifs qui perturbent non seulement la transmission de la liaison MIC en fonctionnement normal, mais également les différentes télélocalisations pendant une procédure de télélocalisation et de test.

La présente invention a pour but de fournir une installation du type défini ci-dessus qui est affranchie de tout bouclage à tort dans la liaison provoqué par des impulsions parasites.

A cette fin, l'invention a pour objet, une installation de télélocalisation telle que caractérisée dans la revendication 1.

Le fait que chaque séquence de télélocalisation est composée d'un nombre prédéterminé k d'interruptions qui sont non consécutives, c'est-à-dire espacées l'une de l'autre par un intervalle rempli d'un signal MIC, lequel nombre est supérieur ou égal à 2 et est relativement grand en pratique, tel que 9, réduit tout risque de bouclage intempestif par des interruptions parasites, puisque la probabilité est très faible pour qu'un nombre k d'interruptions parasites soit produit pendant la durée prédéterminée. En outre, même si une ou plusieurs interruptions parasites s'insèrent dans une séquence de télélocalisation, il n'y aura pas de bouclage, puisque celui-ci ne peut être effectué strictement que pour k interruptions comprises dans la durée prédéterminée.

D'autres avantages de la présente invention apparaîtront plus clairement à la lecture de la description qui suit d'exemples préférés de réalisation et des dessins annexés correspondants, dans lesquels :

la Figure 1 est un bloc-diagramme schématique d'une installation de télélocalisation, selon l'invention, pour liaison MIC à câbles et répéteurs ;

la Figure 2 est un diagramme de signaux logiques inhérents à la télélocalisation d'une paire de répéteurs ;

la Figure 3 est un bloc-diagramme détaillé du circuit de télélocalisation associé à une paire de répéteurs ; et

la Figure 4 est un bloc-diagramme détaillé analogue à celui de la Fig. 3, montrant une autre interconnexion du circuit de télélocalisation relativement aux circuits composants des deux répéteurs associés.

L'exemple de réalisation qui va être décrit ci-après est relatif à une liaison numérique MIC bidirectionnelle à 2 048 kbit/s, entre un premier équipement terminal dit surveillant 1 et un second équipement terminal distant 2. Entre les deux équipements terminaux 1 et 2, la liaison est une ligne du type à quatre fils et est partagée en P sections de ligne dont les éléments constitutifs sont désignés par des numéros de référence ayant des indices 1 à P, respectivement. Une section désignée par l'indice p — variant de 1 à P — comprend, à partir de l'extrémité du côté du terminal 1, deux paires de câbles coaxiaux symétriques $3_p$-$4_p$, en tant que moyen de transmission, et une paire de répéteurs $5_p$-$6_p$, en tant que circuits d'amplification intermédiaires. La dernière section désignée par l'indice P + 1 ne comprend qu'un tronçon de paires de câbles coaxiaux symétriques $3_{P+1}$ et $4_{P+1}$ qui relie la dernière paire de répéteurs $5_P$-$6_P$ à l'équipement distant 2. Les éléments $3_1$-$5_1$ à $3_P$-$5_P$ et $3_{P+1}$ sont affectés à la transmission du signal numérique sur la voie aller 3 de la liaison, suivant le sens aller de l'équipement 1 vers l'équipement 2, et les éléments $4_{P+1}$ et $6_P$-$4_P$ à $6_1$-$4_1$ sont affectés à la transmission du signal numérique sur la voie retour de la liaison, suivant le sens retour de l'équipement 2 vers l'équipement 1.

Comme il est connu, tous les répéteurs sont identiques. Chaque répéteur $5_p$, $6_p$, p variant de 1 à P, comprend tous les moyens pour retransmettre le signal reçu MIC amplifié et convenablement égalisé, tels que des moyens de transcodage d'entrée convertissant le signal entrant en code de ligne en un signal en code binaire, des moyens de récupération de rythme, des moyens d'amplification et d'égalisation, des moyens de régulation de gain et des moyens de transcodage de sortie convertissant le signal amplifié en code binaire en un signal sortant en code de ligne. Chaque paire de répéteurs $5_p$-$6_p$ est également associée à un circuit de télélocalisation $7_p$, objet de l'invention. Ce circuit permet au moyen de commutateurs de boucler la liaison à travers les circuits $5_p$, $7_p$ et $6_p$ sous la commande de l'équipement surveillant 1 et de déconnecter les paires de répéteurs suivantes $5_{p+1}$-$6_{p+1}$ à $5_P$-$6_P$ et l'équipement distant 2 par rapport à l'équipement surveillant 1.

Dans le circuit de télélocalisation $7_p$, le bouclage est effectué en réponse à la détection d'un premier signal de télélocalisation qui est émis par l'équipement terminal surveillant 1 selon le sens aller sur la voie aller, composée par les câbles $3_1$ à $3_{P+1}$.

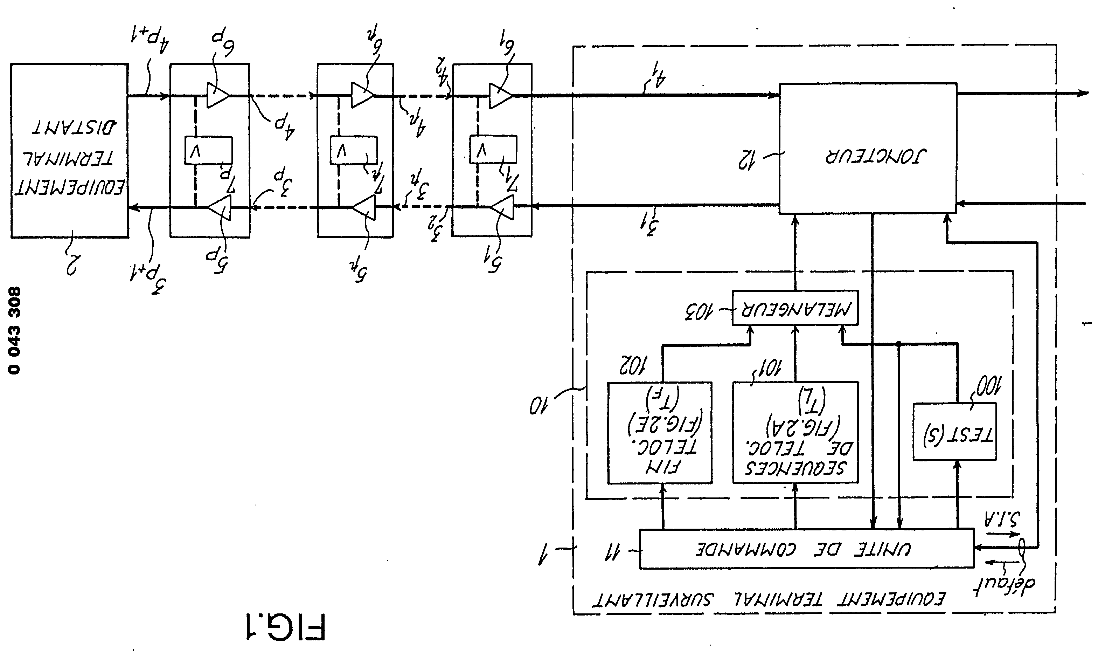

Sur la Fig. 1, on n'a représenté dans l'équipement surveillant 1 que les circuits propres à la télélocalisation. Il reste entendu que l'équipement 1 ainsi que l'équipement distant 2 comportent tous les circuits nécessaires à la télélocalisation des répéteurs, dans le cas où la liaison est par câble et donc téléalimentée, à l'élaboration de signaux de test particuliers pendant la phase de télélocalisation qui sont transmis selon le sens aller sur la voie aller, et à la réception de ces signaux de test et du signal informatif MIC normalement transmis en fonctionnement normal en vue de détecter les défauts de ligne. De tels défauts sont par exemple une perte de rythme du signal reçu, un taux d'erreurs supérieur à une valeur prédéterminée, une absence du signal reçu, un affaiblissement inadmissible du signal reçu, etc... En particulier, pour la réalisation décrite ici où le code en ligne est un code bipolaire à haute densité HDBn, par exemple le code HDB3, un défaut peut être aussi un viol de bipolarité du code binaire HDB3 dans le signal reçu. Les caractéristiques du code HDBn sont par exemple indiquées dans l'article de T.A. MOORE, paru dans « The Radio and Electronic Engineer, Vol. 44, No 8, pages 421 à 427, Août 1974 ». Chaque équipement terminal 1, 2 comporte également un générateur produisant un signal d'indication d'alarme (S.I.A.) qui est émis vers l'extérieur de la liaison, en aval de l'équipement, en réponse à une détection de défaut. L'équipement terminal peut comporter un générateur de signal d'inhibition d'alarme, émis dans la liaison, en réponse à un signal d'indication d'alarme provenant de l'extérieur de la liaison (voir par exemple la demande de brevet EP-A-0 032 328 déposée le 28 novembre 1980 au nom de l'actuelle demanderesse et publiée le 22 juillet 1981, dans le cas où le terminal est inclus dans une station desservant une pluralité de liaisons MIC d'une artère de transmission).

Ainsi dans la Fig. 1 ne sont représentés dans l'équipement 1 que les générateurs des signaux de télélocalisation 10 et l'unité de commande de télélocalisation 11. L'unité 11 est organisée autour d'un microprocesseur qui est asservi par un clavier alphanumérique et qui est relié à un dispositif d'affichage permettant, en outre, d'indiquer à l'opérateur le rang 1 à P de la paire télélocalisée. Au moyen du clavier, une suite de séquences de télélocalisation peut être commandée manuellement ou automatiquement en dépendance du signal de test sélectionné et des mesures effectuées. L'unité de commande 11 est, de préférence, amovible et déconnectable du reste de l'équipement 1 à travers une interface appropriée afin qu'elle puisse être incluse dans une valise dite de maintenance utilisable pour des mesures dans d'autres liaisons.

On notera que l'unité de commande 11 peut gérer à la fois plusieurs liaisons numériques MIC d'une artère desservant une station terminale.

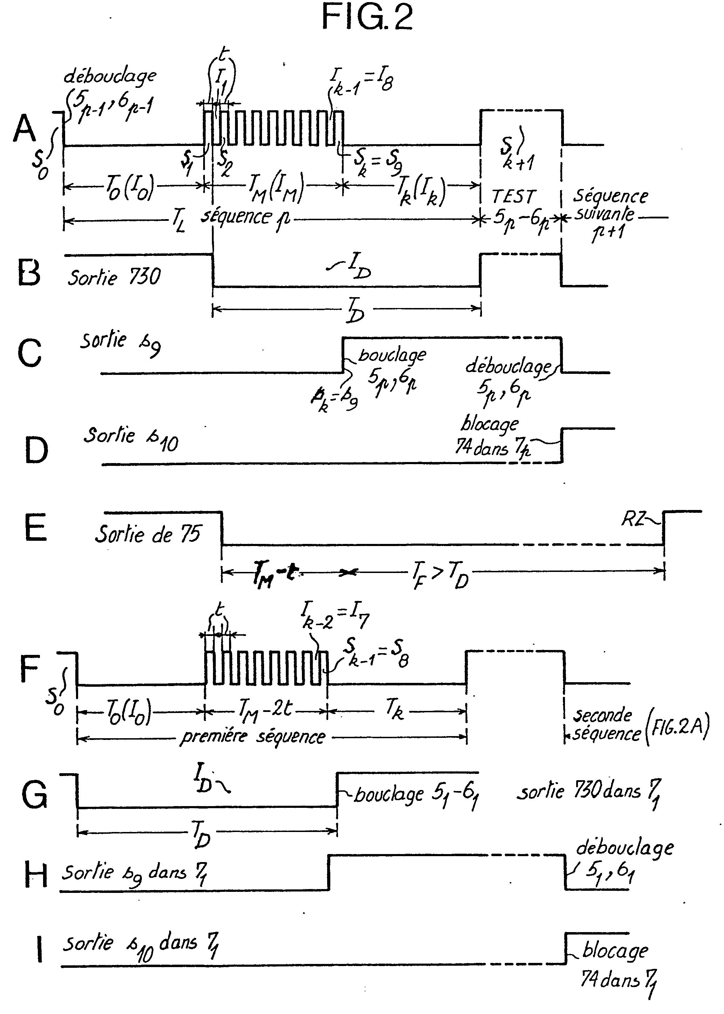

Avant de décrire en détail le circuit de télélocalisation d'une paire de répéteurs dont la structure est étroitement liée aux signaux de télélocalisation selon l'invention, on se reportera à la Fig. 2. La ligne A de cette figure montre l'enveloppe d'une séquence récurrente du premier signal de télélocalisation. Une telle séquence est destinée à boucler une paire quelconque de répéteurs, c'est-à-dire à relier une borne du répéteur aller $5_p$, telle que sa sortie, à une borne du répéteur retour 6, telle que son entrée. Comme déjà dit, la procédure de télélocalisation étant du type pas à pas, la séquence propre à télélocaliser la paire de répéteurs $5_p$-$6_p$ de rang p doit provoquer, avant le bouclage de cette paire, le débouclage de la paire précédente. Le cas particulier de la première paire de répéteurs $5_1$-$6_1$, non précédée par une autre paire, sera évoquée plus loin.

La séquence de télélocalisation est composée de trois champs successifs $I_0$, $I_M$ et $I_k$. Le premier champ $I_0$ est précédé d'un champ $S_0$ qui est composé par un signal quelconque MIC S. Le champ $I_0$ ne comporte pas de signal, c'est-à-dire est entièrement au niveau bas « 0 ». Le second champ $I_M$ est composé d'une suite alternée d'un nombre entier prédéterminé k de sous-champs $S_1$ à $S_k$ qui sont remplis par le signal quelconque MIC S et de k − 1 sous-champs $I_1$ à $I_{k-1}$ qui sont sans signal, c'est-à-dire entièrement composés de digits nuls. Le troisième champ $I_k$ est entièrement au niveau bas « 0 » et est suivi d'un champ $S_{k+1}$ composé par le signal quelconque S. De préférence les sous-champs $S_1$ à $S_k$ et $I_1$ à $I_{k-1}$ ont des durées égales t et leur ensemble occupant le champ $I_M$ est au milieu de la séquence de télélocalisation, c'est-à-dire les largeurs $T_0$, $T_k$ des premier et troisième champs $I_0$, $I_k$ sont égales.

Selon un exemple préféré, une telle séquence de télélocalisation pour une liaison MIC à 2.048 kbit/s, dont le code en ligne est le code HDB3, a les caractéristiques temporelles suivantes qui ont été sélectionnées en fonction de critères présentés dans la suite.

— durée de la séquence $T_L$ = 102 ms ;
— largeur de chacun des champs $I_0$, $I_M$, $I_k$ : $T_0 = T_M = T_k = (2k − 1)t = 34$ ms ;
— largeur de chacun des sous-champs $S_1$ à $S_k$ et $I_1$ à $I_{k-1}$ : t = 2 ms ;

— nombre de champs sans signal ou interruption $I_0$ à $I_k$ : k + 1 = 10 ;
— durée minimale du champ $S_0$ précédant la séquence ou $S_{k+1}$ succédant à la séquence, c'est-à-dire séparant deux séquences de télélocalisation successives : $t_m$ = 50 µs ;
— signal quelconque MIC S : signal pseudoaléatoire produit par un générateur pseudoaléatoire 100 inclus dans l'équipement terminal surveillant 1.

Comme on le verra dans la suite, dans la $p^{ième}$ séquence de télélocalisation, le premier front descendant correspondant au début de l'interruption $I_0$ provoque le débouclage de la paire de répéteurs précédente $5_{p-1}$-$6_{p-1}$ et n'est pas reçue par le circuit de télélocalisation $7_p$. Le front descendant correspondant au début de l'interruption $I_k$, qui est détectée comme les précédentes $I_1$ à $I_{k-1}$, provoque le bouclage des répéteurs $5_p$-$6_p$.

Comme déjà dit dans l'entrée en matière, le principe de télélocalisation selon l'invention repose sur le comptage des interruptions d'un signal MIC, c'est-à-dire des intervalles sans signal, au niveau zéro, dans les circuits de télélocalisation $7_1$ à $7_P$. Un tel circuit de télélocalisation est de préférence structuré autour de bascules monostables pour déceler de telles interruptions et d'un compteur pour compter celles-ci.

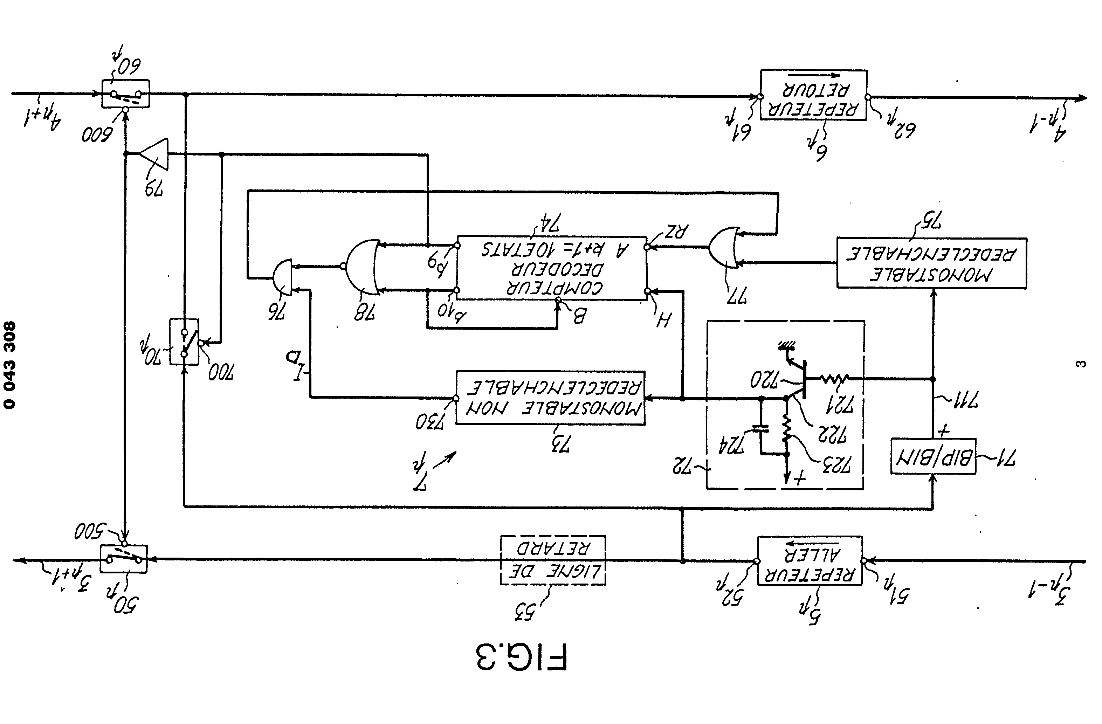

Un circuit de télélocalisation $7_p$ est représenté à la Fig. 3. Sur cette figure, on retrouve également le répéteur aller $5_p$ et le répéteur retour $6_p$ associés qui seront bouclés sous la commande du circuit de télélocalisation $7_p$. Le bouclage ainsi que le débouclage sont effectués par des moyens de bouclage et de débouclage qui comprennent par exemple trois interrupteurs bipolaires. Deux interrupteurs $50_p$ et $60_p$ sont insérés sur les voies aller et retour. Le troisième interrupteur $70_p$ a ses bornes reliées respectivement à la sortie $52_p$ du répéteur aller $5_p$ et à l'entrée $61_p$ du répéteur retour $6_p$. En fonctionnement normal et en l'absence de télélocalisation de la paire de répéteurs considérée $5_p$-$6_p$, les interrupteurs $50_p$ et $60_p$ sont fermés, comme montré par la position des contacts mobiles en traits pleins. Selon la réalisation illustrée à la Fig. 3, ils relient respectivement la sortie $52_p$ du répéteur aller $5_p$ à l'extrémité amont des câbles $3_{p+1}$ de la section de ligne suivante et l'entrée $61_p$ du répéteur retour $6_p$ à l'extrémité aval des câbles $4_{p+1}$ de la section de ligne précédente. Par contre, l'interrupteur $70_p$ est ouvert.

Un circuit de télélocalisation $7_p$ comporte, selon la réalisation préférée illustrée à la Fig. 3, un convertisseur bipolaire-binaire 71, des moyens d'inhibition de toute interruption du signal MIC qui sont sous la forme d'un circuit de temporisation 72 à constante de temps $T_m$, des moyens de détection et de comptage des interruptions de signaux de télélocalisation qui comprennent essentiellement une bascule monostable non redéclenchable 73 et un compteur-décodeur 74 ayant au moins k + 1 = 10 états possibles, des seconds moyens de détection incluant une bascule monostable redéclenchable 75, ainsi que d'autres éléments logiques 76 à 79.

En vue de simplifier la logique du circuit de télélocalisation 7, celui-ci opère uniquement sur l'un des signaux binaires composants $HDB3^+$ et $HDB3^-$. Les bits à l'état « 1 » du signal binaire $HDB3^+$ correspondent uniquement aux digits positifs du signal en code HDB3 convoyé par la liaison, et les bits à l'état « 1 » du signal binaire $HDB3^-$ correspondent uniquement aux digits négatifs du signal en code HDB3. On supposera que le convertisseur bipolaire-binaire 71 convertit le signal bipolaire HDB3 délivré par la sortie $52_p$ du répéteur aller $5_p$ en le signal binaire à digits positifs $HDB3^+$.

Le circuit de temporisation 72 comprend un transistor bipolaire NPN à émetteur commun 720, dont la résistance de base 721 est reliée à la sortie 711 du convertisseur 71 qui fournit le signal binaire $HDB3^+$. Le collecteur 722 du transistor 720 est relié à la borne de tension positive (+) du circuit de téléalimentation (ou d'alimentation) du répéteur aller $5_p$ à travers un circuit à résistance 723 et condensateur 724 parallèles. Le collecteur 722 du transistor 720 est également relié à l'entrée de la bascule monostable non redéclenchable 73 et à l'entrée d'horloge H du compteur 74.

Le circuit de temporisation 72 est destiné à inhiber toute interruption, ou plus précisément toute suite de zéros, qui peut se trouver normalement dans un signal MIC convoyé par la liaison. Par exemple, un signal HDBn ne peut pas comprendre, par définition, plus de n zéros consécutifs. Dans le cas présent, un signal $HDB3^+$ appliqué à l'entrée 711 du circuit 72 peut comprendre au plus $4n + 2 = 14$ zéros consécutifs. Pour une liaison MIC à 2 048 kbit/s, correspondant à des digits de durée égale à 0,49 μs, les absences de signal MIC ayant des durées inférieures ou égales à $14 \times 0,49 = 6,9$ μs ne seront pas comptabilisées par le compteur 74 et ne déclencheront pas la bascule monostable 73, si la constante de temps $t_m$ du circuit résistif et capacitif 723-724 est supérieure à 6,9 μs. Afin de s'affranchir de tout déclenchement et comptage intempestifs, tels que ceux provoqués par exemple par des répéteurs « douteux » ayant perdus provisoirement la fréquence d'horloge à 2 048 kHz du signal MIC, la constante de temps $t_m$ est choisie égale à 50 μs, ce qui correspond à la durée d'une centaine de digits binaires consécutifs. Ainsi, lorsqu'une suite de bits à l'état « 0 » est appliquée à l'entrée 711 du circuit 72 pendant une durée inférieure à $t_m$, le transistor 720 se bloque mais le condensateur 724 n'a pas eu le temps de se décharger. Une telle interruption n'est pas prise en compte par la bascule 73 et le compteur 74. Au contraire, lorsque les interruptions sont supérieures à $t_m$, ce qui correspond uniquement à celles des signaux de télélocalisation, elles sont prises en compte. Il en résulte que, pour une séquence du premier signal de télélocalisation où les champs S sont occupés par un signal quelconque n'ayant pas de suite de zéros consécutifs de durée supérieure à $t_m$, le signal de sortie sur le collecteur 722 a la même enveloppe que celle montrée à la Fig. 2A, à l'exception que les fronts descendants sont décalés vers la droite d'une durée petite égale à $t_m$ et comprenant des digits binaires « 1 ».

La bascule monostable 73 et le compteur 74 ont pour but de commander le bouclage des répéteurs $5_p$ et $6_p$ à travers l'équipement terminal surveillant 1 dès que le $k^{ième}$ front descendant reçu par le circuit $7_p$ inclus dans le premier signal de télélocalisation a été détecté. En d'autres termes, le bouclage est effectué uniquement lors de la détection d'un $k^{ième}$ front descendant du signal transmis par la sortie ou collecteur 722 du circuit 72 dans un intervalle de durée inférieure à $T_D$ succédant à la première interruption détectée $I_1$ (Fig. 2).

La bascule monostable 73 est du type non redéclenchable, c'est-à-dire produit sur sa sortie 730 une impulsion négative $I_D$ ayant une largeur $T_D$ au moins supérieure à $2(k - 1)t$, en réponse à un front descendant sur son entrée, quelle que soit l'enveloppe du signal entrant après ce premier front descendant pendant la durée $T_L$. Par exemple, comme montré à la Fig. 2B, le front montant de l'impulsion $I_D$ est en phase avec le front montant de la dernière interruption $I_K$ de la première séquence reçue. La largeur $T_D$ est alors égale à $2(k - 1)t + T_k = 66$ ms. Ainsi la bascule monostable 73 contribue à limiter la durée du comptage des fronts d'horloge descendants détectés du signal de la Fig. 2A dans le compteur 74. Cette limitation est assurée au moyen d'une porte ET 76 dont une entrée est reliée à la sortie 730 de la bascule 73 et dont la sortie est reliée à l'entrée de remise à zéro RZ du compteur 74, à travers une porte OU 77. Il y a remise à zéro du compteur 74 lorsque l'entrée RZ reçoit un front montant, du niveau bas « 0 » au niveau haut « 1 ». Ainsi en réponse au premier front descendant du signal sortant du circuit 72, entre les champs $S_1$ et $I_1$ (Fig. 2A), l'impulsion négative de sortie de la bascule 73 maintient à zéro l'entrée RZ, quel que soit l'état de l'autre entrée de la porte ET 76, et permet le comptage des fronts d'horloge descendants du signal de télélocalisation pendant la durée $T_D$. Cette autre entrée de la porte ET 76 est reliée à travers une porte NON-OU 78 aux sorties $s_9$ et $s_{10}$ du compteur 74 qui sont respectivement à l'état « 1 » lorsque le compte du compteur est égal à 9, resp. 10.

La sortie $s_9$ est reliée aux entrées de commande 500 et 600 des interrupteurs 50 et 60 à travers un inverseur 79 et est reliée directement à l'entrée de commande 700 de l'interrupteur 70. Ainsi, lorsque le compte du compteur 74 a atteint $k = 9$, en réponse à la détection du $k^{ième}$ front descendant reçu et détecté de la séquence de télélocalisation, les interrupteurs 50 et 60 sont ouverts et l'interrupteur 70 est fermé, comme montré par la position de leurs contacts mobiles en traits interrompus courts à la Fig. 3. La sortie $52_p$ du répéteur aller $5_p$ est reliée à l'entrée $61_p$ du répéteur retour $6_p$ à travers l'interrupteur fermé 70 et, par suite, la paire de répéteurs est bouclée à travers l'équipement terminal surveillant 1. Ce bouclage est maintenu pour analyser les défauts du signal de test bouclé qui sont détectés par les détecteurs de défauts de l'équipement 1. Cette durée d'analyse est celle du champ $S_{k+1}$ succédant à la $p^{ième}$ séquence et précédant la $(p + 1)^{ième}$ séquence.

Le compte du compteur 74 est bouclé à $k = 9$ tant qu'un $(k + 1)^{ième} = 10^{ième}$ front descendant d'horloge n'a pas été reçu par l'entrée H du compteur 74. En effet, d'une part, l'état à « 1 » de la sortie $S_9$ (Fig. 2C) prend le relais de l'impulsion de sortie de la bascule monostable 73 (Fig. 2B) pour maintenir à zéro l'entrée RZ du compteur 74 à travers les portes 78 et 76. D'autre part, le passage du compteur 74 de $k = 9$ à $k + 1 = 10$ provoque la mise à zéro de la sortie $s_9$ (Fig. 2C), qui commande le débouclage des répéteurs $4_p$ et $5_p$ par l'ouverture de l'interrupteur 70 et par les fermetures des interrupteurs 50 et 60, et provoque également la mise à l'état « 1 » de la sortie $s_{10}$ (Fig. 2D) qui commande le blocage à $k + 1 = 10$ du compteur 10 par application d'un « 1 » sur l'entrée de blocage du compteur B du compteur 74 et qui maintient l'entrée RZ à l'état « 0 ». Ainsi, après la transmission du signal de test S, le premier front descendant entre les champs $S_0$ et $I_0$ de la $(p + 1)^{ième}$ séquence suivante propre à télélocaliser la paire de répéteurs suivants $5_{p+1}$-$6_{p+1}$, bloque le compte du compteur 74 à $k + 1 = 10$, ce qui rend insensible le circuit de télélocalisation $7_p$ à tout front descendant d'horloge reçu ultérieurement et, par suite, inhibe la fonction du comptage et de commande de bouclage. La détection du premier front descendant de la $(p + 1)^{ième}$ séquence est suivie du retour au repos des interrupteurs $50_p$, $60_p$ et $70_p$, (contacts mobiles en traits pleins sur la Fig. 3).

De ces dispositions, il apparaît que le circuit de télélocalisation $7_p$ est préservé contre toute commande parasite indésirable de bouclage des répéteurs $5_p$-$6_p$. Comme déjà dit, si le signal S en code HDB3 présente des suites de digits nuls plus grandes que $n = 3$, suite à des pertes de rythmes des répéteurs précédents $5_1$ à $5_{p-1}$, qui en pratique ont une durée n'excédant jamais la durée $t_m = 50$ µs, le compteur 74 et la bascule monostable 73 y sont insensibles. Au cas où une ou plusieurs interruptions successives de signal de durée supérieure à $t_m$ seraient détectées, pour qu'il y ait bouclage intempestif il faudrait non seulement que les interruptions soient au nombre de $k = 9$ mais également qu'elles soient comprises dans une durée n'excédant pas $T_D$. En effet, si de telles interruptions apparaissent, inférieures en nombre à $k = 9$, le compteur 74 les compte et, simultanément, la bascule 73 émet, en réponse à la première interruption, une impulsion négative de durée $T_D$ (Fig. 2B) dont le front montant provoque la mise à « 1 » de l'entrée RZ et, par conséquent, la remise à zéro du compteur 74 après de telles interruptions parasites. Ceci inhibe le compteur de toutes comptabilisations d'interruptions imitatives et cumulatives analogues à celles d'une séquence de télélocalisation. En pratique, on conçoit que de telles interruptions parasites, provoquées par la foudre par exemple, non seulement toutes de durées au moins égales à $t_m = 50$ µs mais en nombre égal à $k = 9$ pendant une durée $T_D = 66$ ms, sont inexistantes ou du moins de probabilité très faible.

Par ailleurs, le fait que, après bouclage, le compte du compteur 74 soit bloqué à $k + 1 = 10$ et ne peut plus retourner notamment à $k = 9$ pour commander un bouclage, permet la commande pas à pas des bouclages de paires de répéteurs, c'est-à-dire le passage des séquences de bouclages ultérieures, telles que celle montrée à la Fig. 2A, pour les paires suivantes $5_{p+1}$-$6_{p+1}$ à $5_P$-$6_P$. Accessoirement, ce blocage à $k + 1 = 10$ complète la protection contre les interruptions intempestives en nombre supérieure ou égale à 10 pendant une durée égale à $T_D = 66$ ms, puisqu'il n'y a qu'un bouclage fugitif pendant cette durée $T_D$ en réponse à une interruption telle que $I_k$. Par ailleurs, si une ou plusieurs interruptions parasites s'enchevêtrent dans une séquence au cours d'une procédure de télélocalisation, ceci est automatiquement signalé dans l'équipement terminal surveillant 1, puisque pratiquement aucun signal de test n'est reçu à partir de la voie retour.

En se reportant à nouveau à la Fig. 1, on notera que l'unité de commande 11 de l'équipement terminal surveillant 1 comporte, de manière connue, des moyens automatiques pour effectuer la télélocalisation de toutes les paires de répéteurs dans l'ordre 1 à P et analyser les caractéristiques du signal de test soit par commande automatique en réponse à un défaut du signal informatif MIC normal qui est détecté sur la voie aller $3_1$ à $3_{P+1}$ par l'équipement distant 2, et/ou en réponse à un défaut détecté sur la voie retour $4_{P+1}$ à $4_1$ par l'équipement surveillant 1 et/ou soit par commande manuelle lors d'une phase de maintenance de la liaison. De tels moyens sont également utilisés pour télélocaliser directement une paire de répéteurs de rang donné p, par exemple en vue de vérifier le bon fonctionnement de celle-ci après remplacement de certains organes défaillants d'un répéteur ou des répéteurs de ladite paire.

Le générateur de signaux de télélocalisation 10 montré à la Fig. 1 comprend plusieurs générateurs de signaux 100 à 102 propres à la télélocalisation et aux tests. Un générateur 100 produit un signal de test parmi d'autres qui est sélectionné par l'unité de commande 11. Au moins l'un de ces signaux de test est un signal pseudoaléatoire.

Un générateur 101 produit les séquences de télélocalisation. En fait, parmi les P séquences de télélocalisation produites par le générateur 101, la première séquence propre à boucler la première paire de répéteurs $5_1$-$6_1$ n'est pas strictement identique aux $(P - 1)$ autres suivantes, telles que celle montrée à la Fig. 2A. Etant donné que le répéteur aller $5_1$ n'est précédé d'aucun autre répéteur sur la voie aller, l'interruption $I_0$ de la première séquence est comptée par le compteur 74 du circuit de télélocalisation $7_1$. Aussi, la première séquence est identique à celle décrite selon la Fig. 2A, à l'exception qu'elle ne comporte plus les sous-champs $I_{k-1}$ et $S_k$. Cette séquence est montrée à la Fig. 2F et est composée dans l'ordre suivant des sous-champs $I_0$, $S_1$, $I_1$, ... $I_{k-2} = I_7$, $S_{k-1} = S_8$, $I_k$. Le front descendant succédant immédiatement au sous-champ $S_{k-1} = S_8$ provoque le bouclage des répéteurs $5_1$-$6_1$, avant que l'impulsion $I_D$ à la sortie 730 de la bascule 73 du circuit de télélocalisation $7_1$ soit terminée, comme montré à la Fig. 2G. Les Figs. 2H et 2I montrent l'état des sorties $s_9$ et $s_{10}$ du compteur 74 du circuit $7_1$.

Bien entendu, la première séquence ne pourrait être composée que des sous-champs alternés $S_1$ à $S_k$ et $I_1$ à $I_k$ de la Fig. 2A.

Par conséquent, pour télélocaliser une paire de répéteurs $5_p$-$6_p$, le générateur 101 émet sur la voie aller 3, sous la commande de l'unité 11, d'abord la première séquence montrée à la Fig. 2F, puis p-1 séquences telles que celle montrée à la Fig. 2A. Si la paire de répéteurs $5_p$-$6_p$ doit être télélocalisée directement, les séquences se succèdent immédiatement, avec une durée entre elles très faible, supérieure à $T_L$. Par contre, si on procède à une recherche de défauts dans la liaison, entre chaque séquence est prévue une émission de signaux de test par le générateur 100 qui seront analysés par l'unité de commande 11, par comparaison entre leurs états en sortie du générateur 100 et en réception de la voie retour 4, après bouclage de chaque paire de répéteurs.

Enfin un troisième générateur 102 transmet un second signal dit de fin de télélocalisation, tel que montré à la Fig. 2E, pour déboucler la dernière paire de répéteurs bouclés, par exemple de rang p, et pour remettre à zéro tous les compteurs 74 des circuits de télélocalisation $7_1$ à $7_p$, sous la commande de l'unité 11.

Dans l'équipement 1, les sorties des générateurs 100, 101, 102 sont reliées aux entrées d'un mélangeur 103 dont la sortie est reliée à l'extrémité amont des câbles $3_1$ de la voie aller de la première section à travers le joncteur 12 de l'équipement surveillant 1. Ce joncteur 12 comprend au moins un convertisseur binaire-bipolaire et le répéteur aller propres au terminal surveillant ainsi que le convertisseur bipolaire-binaire et le répéteur associés sur la voie de retour. On notera que dans le cas où le joncteur 12 du terminal 1 comporte une paire de répéteurs, celle-ci joue le rôle de la première paire de répéteurs $5_1$-$6_1$.

La procédure de télélocalisation d'une paire de répéteurs de rang p s'effectue de la manière suivante, sous la commande de l'unité 11.

Le générateur 100 émet un signal de test sélectionné. Le générateur 101 émet d'abord la première séquence de télélocalisation (Fig. 2F), puis une suite de p − 1 séquences de télélocalisation pratiquement consécutives, telles que celle montrée à la Fig. 2A, qui découpent le signal de test au moyen du mélangeur 103. Deux séquences consécutives sont espacées d'une durée supérieure à $T_L$. Le $k^{ième}$ = neuvième front descendant de la première séquence boucle fugitivement la première paire de répéteurs $5_1$, $6_1$, jusqu'à ce que le $(k + 1)^{ième}$ = dixième front descendant reçu correspondant au premier front descendant de la seconde séquence bloque le compteur 74 du circuit de télélocalisation $7_1$ à $(k + 1) = 10$ et déboucle les répéteurs $5_1$ et $6_1$.

Les interrupteurs $50_1$ et $60_1$ de la paire de rang 1 étant fermés, ils permettent le passage des sous-champs $S_1$ à $S_k$ de la seconde séquence et des suivantes. Cette procédure se répète pour chaque séquence de rang 2 à p respectivement dans les circuits de télélocalisation $7_2$ à $7_p$. Chaque circuit de télélocalisation $7_1$ à $7_p$ permet le passage vers la paire suivante que des séquences de rang supérieur. Lors du bouclage momentané d'une paire de répéteurs, les paires suivantes sont déconnectées du terminal surveillant 1 et, à cause de cette interruption du signal, les compteurs 74 des circuits de télélocalisation suivants sont remis à zéro au moyen de leur bascule monostable 75.

En se reportant à la Fig. 3, la bascule monostable 75 a son entrée reliée de préférence à la sortie 711 du convertisseur bipolaire-binaire 71 et a sa sortie reliée à l'autre entrée de la porte OU 77 qui commande l'entrée de remise à zéro RZ du compteur 74. La bascule 75 est du type redéclenchable : elle émet une impulsion négative de durée $T_F$, telle que montrée à la Fig. 2E, en réponse à un front descendant du signal sortant en 711 qui n'est pas suivi d'autres interruptions pendant la durée $T_F$. La durée $T_F$ est supérieure à $T_D$ et est égale par exemple à 2 $T_L$ = 204 ms. Aussi, lorsque le convertisseur 71 transmet une séquence de télélocalisation propre à télélocaliser la paire de répéteurs associée, la sortie de la bascule 75 passe de l'état « 1 » à « 0 » Fig. 2E), en réponse au premier front descendant reçu, puis éventuellement, passe de l'état « 0 » à « 1 » après une durée $T_M$ − t + $T_F$ (ou $T_D$ − t + $T_F$ pour la première séquence ; Fig. 2F), si aucun front descendant ne succède au dernier front de la séquence entre les champs $S_k$ et $I_k$ (Fig. 2A) (ou $S_{k-1}$ et $I_k$ : Fig. 2F). Cependant, étant donné que l'état de la sortie de la bascule 75 est sensible à tout front descendant du signal numérique reçu et d'une séquence de télélocalisation, l'état de sortie de la bascule 75 est sans influence sur la remise à zéro du compteur 74, puisque l'impulsion de durée de comptage $T_D$ transmise par la bascule 73, puis l'état à « 1 » des sorties $s_9$ (Fig. 2C) et $s_{10}$ (Fig. 2D) du compteur 74 maintiennent à zéro l'entrée RZ du compteur 74. Il ne peut y avoir remise à zéro du compte du compteur 74 sous la commande de la bascule 75 que lorsque le signal transmis par le convertisseur 71 est interrompu totalement pendant une durée au moins égale à $T_F$.

Une telle interruption est produite par le générateur 102 en fin de procédure de télélocalisation, telle que décrite ci-dessus, afin de remettre à zéro tous les compteurs 74 des circuits de télélocalisation $7_1$ à $7_p$ et, par suite, de remettre à l'état « 0 »

la sortie $s_9$ du compteur du circuit de télélocalisation $7_p$ et de déboucler les répéteurs $5_p$ et $6_p$. Egalement, en général, afin de se prémunir contre tout débouclage et bouclage à tort, une interruption de durée supérieure ou égale à $T_L$ est produite entre l'instant de bouclage et l'instant de débouclage des paires précédentes de rang 1 à p − 1. Ceci permet de remettre à zéro le compteur avant la réception de la séquence de télélocalisation propre à la paire considérée. Cependant, ceci n'est pas nécessaire, normalement, puisque si certaines interruptions sont reçues par les circuits de télélocalisation en aval de la paire de répéteurs à boucler, ces interruptions ne seront jamais en nombre supérieur à k pendant une durée $T_D$. De plus, s'il y a analyse pendant une durée supérieure à $T_F$, les compteurs 74 des circuits 7 en aval seront maintenus à zéro par les bascules associées 75.

Selon une autre variante, les séquences de télélocalisation peuvent se succéder avec des durées inférieures à $T_L$ lorsque le retard de transmission d'une séquence à travers le répéteur aller $5_p$ est supérieure à $T_L$. Si pratiquement, le répéteur n'apporte pas un tel retard, une ligne de retard, telle que 53 montrée à la Fig. 3 est insérée dans chaque paire, en série avec le répéteur $5_p$ et en amont de l'interrupteur 50. Le retard imposé par cette ligne 53 est tel que additionné à celui imposé par le répéteur $5_p$, le retard global soit de l'ordre de $T_L$, afin que la séquence propre à la paire considérée ne soit pas transmise vers les répéteurs aller suivants après bouclage de la paire considérée.

Cependant, une telle ligne à retard n'est pas en général nécessaire puisque, si les circuits de télélocalisation de rang 2 à P reçoivent la première séquence de télélocalisation et les suivantes et commande le bouclage des répéteurs associés, chaque paire peut être automatiquement débouclée et le compteur associé peut être remis à zéro par une interruption de durée supérieure à $T_L$ succèdant à chaque séquence précèdant la séquence de télélocalisation propre à la paire considérée.

Bien que l'invention ait été décrite suivant un exemple de réalisation préférée, quant à la structure de la liaison MIC, il reste entendu qu'une installation de télélocalisation conforme à la présente invention, peut être appliquée à d'autres types de liaison MIC. Ceux-ci se rapportant à des liaisons hertziennes ou liaison par fibres optiques. Les circuits d'amplification intermédiaires (répéteurs, relais hertziens) peuvent être téléalimentés ou alimentés localement. Le mode de transmission peut être du type analogique, numérique, ou bien encore hybride, c'est-à-dire à transmission analogique sur les tronçons des sections reliant les circuits intermédiaires et à transmission numérique dans les circuits intermédiaires au moyen de convertisseurs analogiques — numériques et numériques — analogiques. Dans tous les cas, les signaux de télélocalisation sont supportés par le même organe de transmission que le signal MIC.

En outre, les emplacements des interrupteurs 50, 60 et 70 peuvent être autres que ceux montrés à la Fig. 3. En effet, le bouclage peut être effectué entre deux bornes quelconques des répéteurs aller et retour d'une paire, chaque borne étant soit une entrée, soit une sortie d'un répéteur. L'un des interrupteurs 50 ou 60 et l'interrupteur 70 peuvent être réalisés par un simple commutateur à deux états sans position intermédiaire. Ces interrupteurs et commutateurs sont du type à relais ou de préférence à transistors ayant une faible consommation en courant.

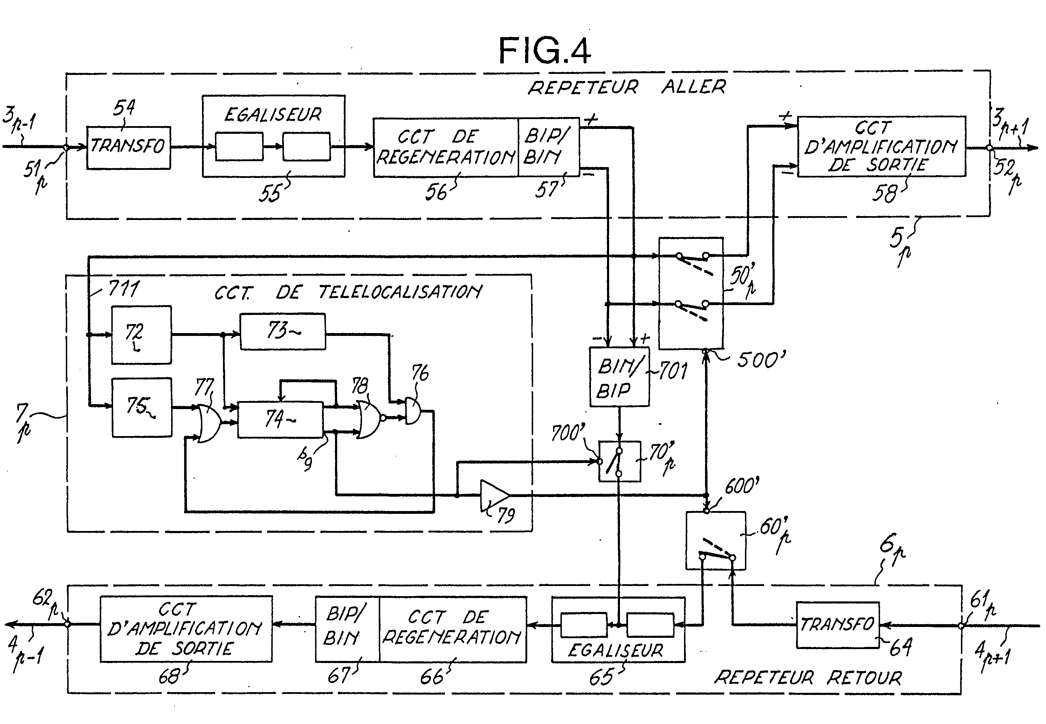

A cet égard, les interrupteurs 50, 60 et 70 peuvent être insérés entre des circuits composants des répéteurs 5, 6. Un tel mode de réalisation est montré à la Fig. 4, dans laquelle l'organisation interne de chaque répéteur a été détaillée.

Chaque répéteur $5_p$, $6_p$ comporte, en série à partir de son entrée $51_p$, $61_p$, un adaptateur d'impédance, tel qu'un transformateur 54, 64, un égaliseur 55, 65, un circuit de régénération du signal bipolaire reçu 56, 66, un convertisseur bipolaire-binaire 57, 67 et un circuit d'amplification de sortie 58, 68 qui reconvertit les signaux composants numériques HDB3$^+$ et HDB3$^-$ en un signal bipolaire amplifié délivré à la sortie $52_p$, $62_p$.

Comme on le voit sur la Fig. 4, les moyens de commutation, analogues aux interrupteurs $50_p$, $60_p$ de la Fig. 3, sont remplacés respectivement par un double interrupteur $50'_p$ et un simple interrupteur $60'_p$. Le double interrupteur $50'_p$ est interconnecté entre les bornes parallèles +, − de sortie du convertisseur 57 et d'entrée du circuit d'amplification de sortie 58 inclus dans le répéteur aller $5_p$. Le simple interrupteur $60'_p$ est interconnecté entre la sortie du transformateur 64 et l'entrée de l'égaliseur 65 du répéteur retour $6_p$.

Le circuit de télélocalisation $7'_p$ est identique à celui déjà décrit pour la Fig. 3, à l'exception qu'il ne comporte plus de convertisseur bipolaire-binaire 71 ; l'entrée commune aux circuits 72 et 75 est reliée à la sortie + du convertisseur 57 qui transmet le signal binaire composant HDB3$^+$.

Le circuit de bouclage est également composé d'un simple interrupteur $70'_p$ dont l'entrée est reliée à la sortie d'un convertisseur binaire-bipolaire 701 qui a ses entrées + et − reliées respectivement aux sorties + et − du convertisseur 57 du répéteur aller. La sortie de l'interrupteur $70'_p$ transmet le signal bipolaire bouclé entre deux composants de l'égaliseur 65, par exemple dans la chaîne directe du circuit de régulation.

Les interrupteurs $50'_p$, $60'_p$ et $70'_p$ reçoivent sur leurs entrées de commande les signaux logiques provenant respectivement de l'inverseur 79 et de la sortie $s_9$ du compteur 74 du circuit de télélocalisation $7_p$. Ils sont commandés d'une manière identique à celle décrite précédemment pour les interrupteurs $50_p$, $60_p$ et $70_p$.

Les interconnexions des interrupteurs dans la Fig. 4 ont été choisies selon les critères de sélection des niveaux relativement élevés des signaux bipolaires reçus. Dans la voie aller, le signal binaire, utilisé par le circuit de télélocalisation $7_p$ pour détecter les interruptions, a été régénéré et remis en forme et, dans la voie retour, le signal bipolaire bouclé est régénéré et amplifié dans le répéteur retour $6_p$.

**Revendications**

1. Installation de télélocalisation pas à pas des paires de circuits d'amplification intermédiaires (5, 6) d'une liaison numérique MIC bidirectionnelle (3, 4) entre des premier et second équipements terminaux (1, 2), dans laquelle le premier équipement (1) comprend des premiers moyens (101) pour transmettre, sur la voie aller (3) de la liaison, du premier (1) vers le second équipement (2), des séquences de télélocalisation ($T_L$), composées chacune d'une première interruption d'un signal MIC (S) convoyé par la liaison et des seconds moyens (102) pour transmettre une interruption dite de fin de télélocalisation ($T_F$) sur la voie aller (3), chaque interruption ayant une durée supérieure à la suite maximale de digits nuls consécutifs que peut contenir le signal MIC et chaque première interruption étant plus courte que l'interruption de fin de télélocalisation, et dans laquelle chaque paire de circuits d'amplification intermédiaires (5-6) est associée à des premiers moyens (73, 74) pour détecter les séquences en vue de commander des moyens de bouclage et de débouclage (50, 60, 70) de la paire (5-6) et à des seconds moyens (75) pour détecter l'interruption de fin de télélocalisation ($T_F$) en vue de remettre au repos lesdits premiers moyens de détection (73, 74), caractérisée en ce que chaque séquence de télélocalisation propre à boucler une paire de circuits d'amplification intermédiaires ($5_p$, $6_p$) comprend un nombre entier prédéterminé k (k ⩾ 2) de premières interruptions non consécutives ($I_0$, $I_1$ à $I_{k-2}$, $I_k$, Fig. 2F ; $I_1$ à $I_k$, Fig. 2A) pendant une durée prédéterminée ($T_D$) et, à l'exception de la première séquence (Fig. 2F) transmise, une interruption ($I_0$, Fig. 2A) qui précède lesdites premières interruptions ($I_1$ à $I_k$) et qui est propre à déboucler la paire précédente ($5_{p-1}$, $6_{p-1}$) et en ce que les premiers moyens de détection sont des moyens de comptage (73, 74) des premières interruptions qui commandent les moyens de bouclage et de débouclage (50, 60, 70) en position de bouclage lorsque leur compte est égal à K, et en position de débouclage lorsque leur compte est différent de k, et qui se remettent à zéro en réponse à un compte inférieur à k pendant la durée prédéterminée ($T_D$) ou en réponse à une interruption de fin de télélocalisation ($T_F$) sous la commande des seconds moyens de détection (75).

2. Installation de télélocalisation conforme à la revendication 1, caractérisée en ce que les moyens de comptage (73, 74) comprennent des moyens (73) pour produire des impulsions (Figs. 2B, 2G) ayant une largeur égale à la durée prédéterminée ($T_D$) en réponse à de quelconques interruptions, quelles que soient les interruptions suivantes pendant la durée prédéterminée succédant à une interruption quelconque, un compteur (74) d'interruptions ($I_0$, $I_1$ à $I_{k-2}$, $I_k$, Fig. 2F ; $I_0$ à $I_k$, Fig. 2A) qui commande les moyens de bouclage et de débouclage (50, 60, 70) en position de bouclage lorsque son compte est égal à k et en position de débouclage lorsque leur compte est différent de k, des moyens (76, 78) reliés aux moyens de production d'impulsions (73) et au compteur (74) pour remettre à zéro (RZ) le compteur (74) lorsque son compte est inférieur à k à la fin de chaque impulsion (Figs. 2B, 2G) de largeur prédéterminée ($T_D$) et des moyens ($s_{10}$, B) pour bloquer le compteur (74) à k + 1 dès que son compte a atteint k + 1.

3. Installation de télélocalisation conforme à la revendication 2, caractérisée en ce que les moyens de productions d'impulsions sont une bascule monostable (73) non redéclenchable qui est sensible au front descendant des interruptions et qui produit des impulsions (Fig. 2B) ayant la largeur prédéterminée ($T_D$).

4. Installation de télélocalisation conforme à l'une des revendications 1 à 3, caractérisée en ce que les seconds moyens de détection comprennent une bascule monostable (75) redéclenchable qui est sensible au front descendant des interruptions et qui produit des impulsions ayant une largeur ($T_F$) supérieure à la durée prédéterminée ($T_D$) et égale à celle de l'interruption de fin de télélocalisation (Fig. 2E).

5. Installation de télélocalisation conforme à l'une des revendications 1 à 4, caractérisée en ce qu'elle comprend des moyens (71 ; 57) entre l'entrée (711) des premiers moyens de détection (73, 74) et la voie aller (3) de la liaison pour convertir le signal MIC dans la liaison en un signal binaire dont les bits à l'état « 1 » correspondent aux digits positifs (ou négatifs) du signal MIC, suivis directement ou indirectement de moyens (72) pour inhiber toute interruption du signal MIC de durée sensiblement supérieure à ladite suite maximale de digits nuls consécutifs du signal MIC.

6. Installation de télélocalisation conforme à la revendication 5, caractérisée en ce que les moyens d'inhibition (72) sont composés par un transistor à émetteur commun (720) dont le collecteur (722) est relié au moins aux premiers moyens de détection (73, 74) et à un circuit résistif et capacitif parallèle (723, 724) ayant une constante de temps ($t_m$) sensiblement supérieure à la durée de ladite suite maximale de digits nuls consécutifs du signal MIC.

7. Installation de télélocalisation conforme à la revendication 5 ou 6, caractérisée en ce que l'entrée des seconds moyens de détection (75) est reliée à la sortie des moyens de conversion (71 ; 57).

8. Installation de télélocalisation conforme à l'une des revendications 1 à 7, caractérisée en ce que sur la voie aller entre l'entrée des moyens de bouclage et de débouclage (50, 60, 70) de chaque paire de circuits d'amplification intermédiaires et l'entrée des premiers et seconds moyens de détection (7) sont interconnectés des moyens (5, 51) pour retarder le signal MIC d'au moins la durée prédéterminée ($T_D$).

## Claims

1. Arrangement for step-by-step remote locating pairs of intermediate amplifying circuits (5, 6) in a bidirectional PCM digital transmission link (3, 4) between first and second end equipments (1, 2), in which the first equipment (1) comprises first means (101) for transmitting in the forward channel (3) of the link from the first (1) to the second equipment (2), remote locate sequences $(T_L)$ each composed of a first interruption in a PCM signal (S) conveyed by the link, and second means (102) for transmitting a so-called remote locate end interruption $(T_F)$ in the forward channel (3), each interruption being longer than the duration of the maximum series of consecutive zero digits that the PCM signal can contain and each first interruption being shorter than the remote locate end interruption, and in which each pair of intermediate amplifying circuits (5-6) is associated with first means (73, 74) for dectecting the sequences with a view to controlling means (50, 60, 70) for closing and opening a loop-back path of the pair (5, 6), and with second means (75) for detecting the remote locate end interruption $(T_F)$ with a view to resetting said first detecting means (73, 74), characterized in that each remote locate sequence intended for closing a loop-back path in a pair of intermediate amplifying circuits $(5_p, 6_p)$ comprises a predetermined integer number k ($k \geqslant 2$) of first nonconsecutive interruptions $(I_0, I_1,$ to $I_{k-2}, I_k,$ Fig. 2F ; $I_1$ to $I_k$, Fig. 2A) during a predetermined period of time $(T_D)$ and, with the exception of the first sequence (Fig. 2F) transmitted, an interruption $(I_0,$ Fig. 2A) which precedes said first interruptions $(I_1$ to $I_k)$ and which is intended for opening the loop-back path of the preceding pair $(5_{p-1}, 6_{p-1})$ and in that the first detecting means are first interruption counting means (73, 74) that control the closing and opening means (50, 60, 70) in the closed loop-back path position when their count is equal to k, and in the opened loop-back path position when their count is different from k, and that return to zero in response to a count less than k during said predetermined period of time $(T_D)$ or in response to a remote locate end interruption $(T_F)$ under the control of the second detecting means (75).

2. Remote locating arrangement according to claim 1, characterized in that the counting means (73, 74) comprise means (73) for producing pulses (Figs. 2B, 2G) having a width equal to the predetermined period of time $(T_D)$ in response to any interruptions whatever the subsequent interruptions during the predetermined period of time following an any interruption, an interruption $(I_0, I_1$ to $I_{k-2}, I_k,$ Fig. 2F ; $I_0$ to $I_k$, Fig. 2A) counter (74) that controls the closing and opening means (50, 60, 70) in the closed loop-back path position when its count is equal to k, and in the opened loop-back path position when its count is different from k, means (76, 78) connected to the pulse producing means (73) and to the counter (74) for zero-resetting (RZ) the counter (74) when its count is less than k at the end of each pulse (Figs. 2B, 2G) having the predetermined width $(T_D)$, and means $(s_{10}, B)$ for stopping the counter (74) at k + 1 once its count has reached k + 1.

3. Remote locating arrangement according to claim 2, characterized in that the pulse producing means are a non-retriggerable monostable flip-flop (73) which is sensitive to the fall front of the interruptions and which produces pulses (Fig. 2B) having the predetermined width $(T_D)$.

4. Remote locating arrangement according to one of claims 1 to 3, characterized in that the second detecting means comprises a retriggerable monostable flip-flop (75) which is sensitive to the fall front of the interruptions and which produces pulses having a width $(T_F)$ greater than the predetermined period of time $(T_D)$ and equal to the width of the remote locate end interruption (Fig. 2E).

5. Remote locating arrangement according to one of claims 1 to 4, characterized in that it comprises means (71 ; 57) between the input (711) of the first detecting means (73, 74) and the forward channel (3) of the link for converting the PCM signal in the link into a binary signal whose state « 1 » bits correspond to the positive (or negative) digits of the PCM signal, followed directly or indirectly means (72) for inhibiting any interruption in the PCM signal having a duration substantially longer than said maximum series of consecutive zero digits of the PCM signal.

6. Remote locating arrangement according to claim 5, characterized in that the inhibiting means (72) comprises a common-emitter transistor (720) whose collector (722) is connected at least to the first detecting means (73, 74) and to a parallel resistive and capacitive circuit (723, 724) having a time constant $(t_m)$ substantially longer than the duration of said maximum series of consecutive zero digits of the PCM signal.

7. Remote locating arrangement according to claim 5 or 6, characterized in that the input of the second detecting means (75) is connected to the output of the converting means (71 ; 57).

8. Remote locating arrangement according to one of claims 1 to 7, characterized in that in the forward channel between the input of the closing and opening means (50, 60, 70) of each intermediate amplifying circuit pair and the input of the first and second detecting means (7) are interconnected means (5, 51) for delaying the PCM signal by at least the predetermined period of time $(T_D)$.

## Ansprüche

1. Einrichtung zur schrittweisen Fernortung von Zwischenverstärkern (5, 6) einer PCM-Verbindung (3, 4) für beide Richtungen zwischen ersten und zweiten Endstationen (1, 2), von denen die erste Endstation (1) eine erste Einrichtung (101), um auf dem Hinweg (3) der Verbindungsstrecke von der ersten Endstation (1) zur zweiten Endstation (2) Fernortungssignalfolgen ($T_L$) zu übertragen, die jeweils aus einer ersten Unterbrechung eines über die Verbindungsstrecke geleiteten PCM-Signales (S) bestehen, und eine zweite Einrichtung (102), um eine als Ende der Fernortung bezeichnete Unterbrechung ($T_F$) auf dem Hinweg (3) der Übertragungsstrecke zu übertragen, aufweist, wobei jede Unterbrechung eine Dauer hat, die größer ist als die maximale Folge von aufeinanderfolgenden Nullstellen, die das PCM-Signal aufweisen kann, und jede erste Unterbrechung kürzer ist als die das Ende der Fernortung bezeichnende Unterbrechung, und wobei jedem Paar von Zwischenverstärkern (5-6) erste Einrichtungen (73, 74) zum Ermitteln der Signalfolgen zur Steuerung von Vorrichtungen (50, 60, 70) zur Schleifenbildung und zur Schleifentrennung des Zwischenverstärkerpaares (5-6) und zweite Einrichtungen (75) zum Ermitteln der das Ende der Fernortung bezeichnenden Unterbrechung ($T_F$) zwecks Abschaltens der ersten Ermittlungseinrichtungen (73, 74) zugeordnet sind, dadurch gekennzeichnet, daß jede Fernortungssignalfolge zur Bildung einer Verbindungsschleife zwischen einem Zwischenverstärkerpaar ($5_p$, $6_p$) eine vorgegebene ganze Zahl k ($k \geqslant 2$) von nicht aufeinanderfolgenden ersten Unterbrechungen ($I_0$, $I_1$ bis $I_{k-2}$, $I_k$, Fig. 2F; $I_1$ bis $I_k$, Fig. 2A) während einer vorgegebenen Zeitspanne ($T_D$) und, mit Ausnahme der ersten übertragenen Signalfolge (Fig. 2), eine Unterbrechung ($I_0$, Fig. 2A), die den ersten Unterbrechungen ($I_1$ bis $I_k$) vorangeht und die zum Öffnen der Schleife des vorausgehend georteten Zwischenverstärkerpaares ($5_{p-1}$, $6_{p-1}$) dient, enthält, und dadurch gekennzeichnet, daß die ersten Ermittlungseinrichtungen (73, 74) Vorrichtungen zum Zählen der ersten Unterbrechungen sind, welche die Vorrichtungen (50, 60, 70) zur Schleifenbildung und zur Schleifentrennung in der Position der Schleifenbildung steuern, wenn ihre Zahl gleich k ist, und in der Position der Schleifentrennung steuern, wenn ihre Zahl sich von k unterscheidet, und die unter der Steuerung der zweiten Ermittlungsvorrichtung (75) auf Null zurückgestellt werden, wenn während der vorgegebenen Zeitspanne ($T_D$) die Zahl kleiner als k bleibt oder eine das Ende der Fernortung bezeichnende Unterbrechung ($T_F$) auftritt.

2. Einrichtung zur Fernortung nach Anspruch 1, dadurch gekennzeichnet, daß die Zählvorrichtungen (73, 74) eine Einrichtung (73) zum Erzeugen von Impulsen (Fig. 2B, 2G), die eine der vorgegebenen Zeitspanne ($T_D$) entsprechende Breite haben, beim Auftreten von irgendwelchen Unterbrechungen aufweist, wie auch die folgenden Unterbrechungen während der vorgegebenen, auf eine beliebige Unterbrechung folgenden Zeitdauer sein mögen, sowie einen Zähler (74) für die Unterbrechungen ($I_0$, $I_1$ bis $I_{k-2}$, $I_k$, Fig. 2F; $I_0$ bis $I_k$, Fig. 2A), der die Vorrichtungen (50, 60, 70) zur Schleifenbildung und zur Schleifentrennung in der Position der Schleifenbildung steuert, wenn sein Zählwert gleich k ist, und in der Position der Schleifentrennung steuert, wenn sein Zählwert sich von k unterscheidet ; Einrichtungen (76, 78), die mit der Einrichtung zur Impulserzeugung (73) und dem Zähler (74) verbunden sind, um den Zähler (74) auf Null (RZ) zurückzustellen, wenn am Ende jedes Impulses (Fig. 2B, 2G) der vorgegebenen Zeitspanne ($T_D$) der Zählwert kleiner ist als k, und eine Einrichtung ($S_{10}$, B) zum Sperren des Zählers 74 auf dem Wert k + 1, sobald sein Zählwert den Wert k + 1 erreicht hat, enthält.

3. Einrichtung zur Fernortung nach Anspruch 2, dadurch gekennzeichnet, daß die Einrichtung zur Impulserzeugung eine monostabile, nicht erneut auslösbare Kippstufe (73) ist, die auf die abfallende Kante der Unterbrechungen anspricht und Impulse mit der vorgegebenen Breite ($T_D$) erzeugt.

4. Einrichtung zur Fernortung nach einem der Ansprüche 1 bis 3, dadurch gekennzeichnet, daß die zweiten Ermittlungseinrichtungen eine erneut auslösbare monostabile Kippstufe (75) aufweise, die auf die abfallende Kante der Unterbrechungen anspricht und Impulse erzeugt, deren Breite ($T_F$) größer als die vorgegebene Zeitspanne ($T_D$) und gleich der Breite der das Ende der Fernortung bezeichnenden Unterbrechung (Fig. 2E) ist.

5. Einrichtung zur Fernortung nach einem der Ansprüche 1 bis 4, dadurch gekennzeichnet, daß sie zwischen dem Eingang (711) der ersten Ermittlungseinrichtungen (73, 74) und dem Hinweg (3) der Verbindungsstrecke Einrichtungen (71 ; 57) aufweist, um das PCM-Signal auf der Verbindungsstrecke in ein Binärsignal umzuwandeln, dessen Bits mit dem Zustand « 1 » den positiven (oder negativen) Stellen des PCM-Signales entsprechen, und daß diese Einrichtungen direkt oder indirekt von einer Einrichtung (72) gefolgt sind, die jede Unterbrechung des PCM-Signales mit einer etwas größeren Dauer als die Maximalfolge der aufeinanderfolgenden Nullstellen des PCM-Signales verhindert.

6. Einrichtung zur Fernortung nach Anspruch 5, dadurch gekennzeichnet, daß die Einrichtung (72) zur Unterbrechungsverhinderung durch einen Transistor mit einem gemeinsamen Emitter (720) gebildet ist, dessen Kollektor (722) mindestens mit den ersten Ermittlungseinrichtungen (73, 74) und mit einer Parallelschaltung (723, 724) aus Widerstand und Kondensator, die eine Zeitkonstante ($t_m$) aufweist, die genau etwas größer ist als die Dauer der Maximalfolge von aufeinanderfolgenden Nullstellen des PCM-Signales, verbunden ist.

7. Einrichtung zur Fernortung nach Anspruch 5 oder 6, dadurch gekennzeichnet, daß der Eingang der zweiten Ermittlungseinrichtung (75) mit dem Ausgang der Umwandlungseinrichtungen (71 ; 57) verbunden ist.

8. Einrichtung zur Fernortung nach einem der Ansprüche 1 bis 7, dadurch gekennzeichnet, daß auf dem Hinweg der Übertragungsstrecke zwischen dem Eingang der Vorrichtungen (50, 60, 70) zur Schleifenbildung und zur Schleifentrennung jedes Paares von Zwischenverstärkern und dem Eingang der ersten und zweiten Ermittlungseinrichtungen (7) Einrichtungen (5, 51) zum Verzögern des PCM-Signales um mindestens die vorgegebene Zeitspanne ($T_D$) eingefügt sind.

FIG.1

# FIG.2

# FIG.3

$3_{n-1}$ ... $51_n$ ... REPETEUR ALLER $5_n$ ... $52_n$ ... LIGNE DE RETARD $53$ ... $50_n$ ... $3_{n+1}$ ... $500$

$71$ BIP/BIN $+$ ... $711$

$72$ ... $723$ ... $722$ ... $724$ ... $721$ ... $720$

MONOSTABLE NON REDECLENCHABLE $73$ ... $730$ ... $I_D$

$7_n$

$700$ ... $70_n$

$H$ ... $B$ ... $b_{10}$ ... $78$ ... $76$

COMPTEUR DECODEUR A $k+1 = 10$ ETATS ... $77$

MONOSTABLE REDECLENCHABLE $75$ ... $RZ$ ... $74$ ... $b_9$

$79$

$4_{n-1}$ ... $62_n$ ... REPETEUR RETOUR $6_n$ ... $61_n$ ... $600$ ... $4_{n+1}$ ... $60_n$

0 043 308

3

# FIG.4

REPETEUR ALLER

TRANSFO 54

EGALISEUR 55

CCT DE REGENERATION 56

BIP/BIN 57

CCT D'AMPLIFICATION DE SORTIE 58

$3_{p-1}$   $51_p$   $3_{p+1}$   $52_p$   $5_p$

$50'_p$   $500'$   $701$   $700'$   $70'_p$   $600'$   $60'_p$

CCT. DE TELELOCALISATION

711   72   73~   75   77   74~   78   76   69   79

$7_p$

BIN/BIP

REPETEUR RETOUR

CCT D'AMPLIFICATION DE SORTIE 68

BIP/BIN 67

CCT DE REGENERATION 66

EGALISEUR 65

TRANSFO 64   $6_p$

$62_p$   $4_{p-1}$   $61_p$   $4_{p+1}$

0 043 308